# EUROPÄISCHE PATENTSCHRIFT

(11) **EP 1 998 911 B1**
(45) Veröffentlichungstag und Bekanntmachung des Hinweises auf die Patenterteilung: **20.07.2011**
(21) Anmeldenummer: 06723733.9
(22) Anmeldetag: 25.03.2006
(51) Int. Cl.: B22C 1/22, B29C 67/00

(54) **VERFAHREN ZUM HERSTELLEN EINER SANDFORM**
METHOD FOR MANUFACTURING A SAND MOULD
PROCEDE DE FABRICATION D'UN MOULE EN SABLE

(43) Veröffentlichungstag der Anmeldung: 10.12.2008
(73) Patentinhaber: Bayerische Motoren Werke Aktiengesellschaft, 80809 München (DE)
(72) Erfinder: HEERE, Harald, 84130 Dingolfing-Schermau (DE); FROSCHAUER, Christian, 94447 Plattling (DE); ADAM, Robert, A-2620 Ternitz/Flatz (AT)
(86) Internationale Anmeldenummer: PCT/EP2006/002755
(87) Internationale Veröffentlichungsnummer: WO 2007/110091

(56) Entgegenhaltungen:
- WO-A1-01/72502
- WO-A2-2004/110719
- DE-A1-102005 009 636
- US-A- 5 932 628
- DATABASE WPI Week 198318 Derwent Publications Ltd., London, GB; AN 1983-42634K XP002409098 & JP 58 050151 A (HITACHI CHEM CO LTD) 24. März 1983 (1983-03-24)

## Beschreibung

Die Erfindung bezieht sich auf ein Verfahren zum Herstellen einer Sandform, nach Patentanspruch 1.

Aus der DE 102 24 981 A1 ist ein generatives 3D-Druckverfahren zur Herstellung von Sandformen mit Hilfe eines Zweikomponenten-Bindemittelsystems bekannt, bei dem ein Formsand/Harzgemisch in übereinanderliegenden Schichten aufgebracht und an jeder einzelnen Schicht mit dem Härter des Bindemittelsystems bedruckt wird, so dass ein individuell geformter Festkörper entsteht, der nach Ablauf der Reaktionszeit des Bindemittelsystems als integrale Metallgussform aus dem umliegenden, ungebundenen Materialbett entnommen werden kann. An ein hierfür, aber auch generell zur Sandformherstellung geeignetes Bindemittelsystem werden hinsichtlich kurzer Reaktionszeiten, geringer Ausgasung während des Gussvorgangs und erzielbarer Sandformfestigkeit hohe Anforderungen gestellt.

So ist aus der DE 101 36 365 A1 ein CO₂-härtbares Bindemittelsystem bekannt, bei welchem der Harzkomponente mindestens eine stickstoffhaltige Verbindung, insbesondere Harnstoffharz, zugemischt ist, um dadurch die mechanische Festigkeit der resultierenden Sandform zu erhöhen. Nachteilig dabei ist, dass die so gefertigten Sandformen ein verstärktes Ausgasungsverhalten während des Abgusses aufweisen, was zum Einschluss von Gasblasen bei der Erstarrung der Metallschmelze und demzufolge zu Porositäten und Lunkerbildungen im Gussteil führt.

Aus der US 5,932,628 ist ein Bindemittel aus einer Harzkomponente aus Furfuryl Alkohol, Harnstoff und Formaldehyd mit einem Stickstoffgehalt der Harzkomponente in dem Bindemittel von 0,4 bis 4 Gew.-% und Sulfonsäure als Härter bekannt.

Die WO 2004/110719 offenbart ein Verfahren und ein System zur Herstellung von dreidimensionalen Formkörpern in einem Schichtbauverfahren.

Darüber hinaus ist ein weiteres, beispielhaftes Bindemittelsystem aus der JP-A-58050151 bekannt.

Aufgabe der Erfindung ist es, ein generatives 3D-Druckverfahren und ein hierfür geeignetes Bindemittelsystem der eingangs genannten Art zu schaffen, welches ein geringes Ausgasungsverhalten während des Gussvorgangs und zugleich eine hohe Festigkeit der mit dem Bindemittelsystem gefertigten Sandformen gewährleistet.

Diese Aufgabe wird erfindungsgemäß durch das im Patentanspruch 1 gekennzeichnete Verfahren gelöst.

Grundlage der Erfindung ist die Erkenntnis, dass eine Festigkeitserhöhung durch Zugabe einer stickstoffhaltigen Verbindung nicht zwangsläufig mit einer erhöhten Ausgasung des Bindemittelsystems während des Abgusses verbunden ist, sondern sich das gussstörende Ausgasungsverhalten überraschenderweise durch eine Stickstoffzugabe zur säurehärtbaren Harzkomponente sogar noch signifikant verringern lässt, wenn der Stickstoffanteil an der Gesamtharzmenge innerhalb definierter Grenzen gehalten und zusätzlich ein spezieller Härter mit einem, bezogen auf die Harzmenge, ebenfalls begrenzten Gewichtsanteil verwendet wird, mit dem Ergebnis, dass die resultierenden Sandformen eine hohe Bruch- und Biegefestigkeit aufweisen und dennoch eine qualitativ hochwertige, von Porositäten und Lunkern weitgehend freie und maßgenaue Gussteilfertigung sicherstellen.

Ein weiterer, vor allem in Verbindung mit dem generativen 3D-Druckverfahren wesentlicher Aspekt des Bindemittelsystems liegt in den verkürzten Reaktionszeiten und den sich daraus ergebenden, höheren Produktionsgeschwindigkeiten. Dabei wird der Formsand vorzugsweise mit dem Härter des Bindemittelsystems vorgemischt und das Sand/Härtergemisch schichtweise mit der stickstoffhaltig angereicherten Harzkomponente bedruckt, wodurch die Sandformfestigkeit nochmals gesteigert werden kann.

Eine besonders bevorzugte Ausgestaltung des erfindungsgemäßen Verfahrens betrifft die Reinigung des Druckkopfes: Während das generative 3D-Drucken mit einer durch eine stickstoffhaltige Verbindung, etwa Harnstoffharz, angereicherten Harzkomponente bisher zumeist daran scheiterte, dass die verstopfungsgefährdeten Druckerdüsen nicht oder nur mit unvertretbar großem Aufwand gereinigt werden konnten, lassen sich die Druckerdüsen von den Harzrückständen des erfindungsgemäßen Bindemittelsystems problemlos mit Hilfe eines aromatischen Alkohols, vorzugsweise Benzylalkohol, befreien.

Als besonders vorteilhaft hat es sich erwiesen, als stickstoffhaltige Verbindung ein Harnstoffharz mit einem Gewichtsanteil an der Gesamtharzmenge von etwa 4% und als Härter Xylolsulfonsäure mit 30 bis 50 Gew.-%, bezogen auf das Gesamtharz, auszuwählen.

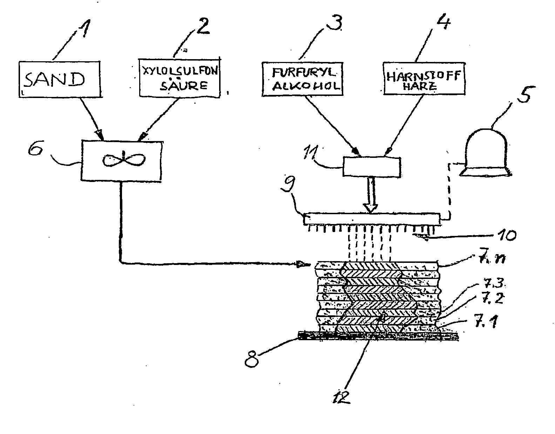

Die Erfindung wird nachfolgend anhand eines Ausführungsbeispiels in Verbindung mit der Zeichnung näher beschrieben, in deren einziger Figur eine generative 3D-Druckanlage in stark schematisierter Darstellung gezeigt ist.

Die in der Zeichnung gezeigte Druckanlage enthält einen Formsandbehälter 1, Vorratsbehälter 2 bis 4 für den Härter bzw. die Harzkomponente eines säurehärtbaren Bindemittelsystems sowie einen Reinigungsmittelbehälter 5. Als Härter ist eine Arylsulfonsäure, nämlich im Ausführungsbeispiel Xylolsulfonsäure vorgesehen, die Harzkomponente im Behälter 3 ist Furfurylalkohol, der Behälter 4 enthält Harnstoffharz oder eine äquivalente stickstoffhaltige Verbindung und das Reinigungsmittel im Behälter 5 besteht aus einem aromatischen Alkohol, z. B. Benzylalkohol.

Der Formsand und die Xylolsulfonsäure werden zunächst im einem Mischer 6 vorgemischt und anschließend in übereinanderliegenden Schichten 7.1.....7.n auf einen Träger 8 aufgebracht. Dabei wird jede einzelne Materialschicht 7 jeweils in einem individuell vorgegebenen Flächenbereich mittels eines Druckkopfes 9, welcher nach Art eines Tintenstrahldruckers mit selektiv ansteuerbaren Harzdüsen 10 ausgestattet ist, mit dem zuvor in einem Mischbehälter 11 mit Harnstoffharz angereicherten Furfurylalkohol bedruckt, so dass die Schichten 7.1.....7.n in den bedruckten Materialzonen sukzessive aushärten und sich zu einem dreidimensional geformten Festkörper 12 verbinden, welcher aus dem umliegenden, ungebundenen Materialbett entnommen werden kann und dann z. B. einen - in der Zeichnung schraffiert dargestellten - Formkern einer (nicht gezeigten) Metallgussform bildet.

Im Einblick auf kurze Aushärtzeiten, eine hohe Sandformfestigkeit und ein geringes Ausgasungsverhalten der Sandform 12 während des Metallgussvorgangs beträgt der Stickstoffanteil der Harnstoffzugabe an der Gesamtharzmenge 2 bis 6 Gew.-% und das Gewichtsverhältnis der Xylolsulfonsäure zur Gesamtharzmenge liegt zwischen 0,1 und 0,65. Als besonders günstig hat sich ein Stickstoffanteil von etwa 4 Gew.-% und ein Härter/Harzverhältnis von 0,3 bis 0,5 erwiesen.

Sehr einfach ist auch die Druckkopfreinigung, da sich Rückstände des Furfurylalkohol/Harnstoffharzgemisches mühelos mit Benzylalkohol aus den Druckerdüsen 10 entfernen lassen.
Zum besseren Verständnis der Erfindung soll ein Bindemittelsystem im Folgenden beschrieben werden.
Ein Bindemittelsystem für Sandformen, auf der Basis einer säurehärtbaren Harzkomponente, insbesondere Furfurylalkohol, ist dadurch gekennzeichnet, dass der Harzkomponente mindestens eine stickstoffhaltige Verbindung mit einem Stickstoffanteil von 2 bis 6 Gew.%, bezogen auf die Gesamtharzmenge, zugegeben und als Härter eine Arylsulfonsäure mit einem Gewichtsanteil von 10 bis 65% der Gesamtharzmenge vorgesehen ist.

Das Bindemittelsystem ist dadurch gekennzeichnet, dass der Stickstoffanteil der stickstoffhaltigen Verbindung an der Gesamtharzmenge bei etwa 4 Gew.-% liegt.

Das Bindemittelsystem ist dadurch gekennzeichnet, dass die stickstoffhaltige Verbindung aus der Gruppe Harnstoff, Harnstoff/Formaldehydharze, Melamin und Melamin/Formaldehydharze ausgewählt ist.

Das Bindemittelsystem ist dadurch gekennzeichnet, dass der Gewichtsanteil der Arylsulfonsäure zwischen 30 und 50% liegt.

Das Bindemittelsystem ist dadurch gekennzeichnet, dass als Härter Xylolsulfonsäure vorgesehen ist.

## Patentansprüche

1. Verfahren zum Herstellen einer Sandform im Wege des generativen 3D-Druckverfahrens mit Hilfe eines säurehärtbaren Bindemittelsystems, wobei
der Harzkomponente des Bindemittelsystems mindestens eine stickstoffhaltige Verbindung mit einem Stickstoffanteil von 2 bis 6 Gew.-%, bezogen auf das Gesamtharz, zugesetzt und als Härter eine Arylsulfonsäure mit einem Gewichtsanteil von 10 bis 65% der Gesamtharzmenge verwendet wird.

2. Verfahren nach Anspruch 1, **dadurch gekennzeichnet, dass** der Formsand mit der Arylsulfonsäure vorgemischt und das Sand/Säuregemisch schichtweise mit der stickstoffhaltigen Harzkomponente bedruckt wird.

3. Verfahren nach Anspruch 1 oder 2, **dadurch gekennzeichnet, dass** zur Druckkopfreinigung ein aromatischer Alkohol, vorzugsweise Benzylalkohol verwendet wird.

4. Verfahren nach einem der Ansprüche 1 bis 3, **dadurch gekennzeichnet, dass** die Harzkomponente aus einer Mischung aus Furfurylalkohol und Harnstoffharz mit einem Stickstoffanteil von etwa 4 Gew.%, bezogen auf die Gesamtharzmenge, besteht.

5. Verfahren nach einem der Ansprüche 1 bis 4, **dadurch gekennzeichnet, dass** als Härter Xylolsulfonsäure mit einem Gewichtsanteil von 30 bis 50% der Gesamtharzmenge verwendet wird.

## Claims

1. A method of producing a sand mould in the generative 3D printing process using an acid-hardenable binder system, wherein
the resin component of the binder system is at least one nitrogenous compound with a nitrogen content of 2 to 6 wt.% relative to the total resin and the hardener is an aryl sulphonic acid weighing 10 to 65% of the total quantity of resin.

2. A method according to claim 1, **characterised in that** the mould sand is mixed with the aryl sulphonic acid, after which the mixture of sand and acid is printed with the nitrogenous resin component, layer by layer.

3. A method according to claim 1 or claim 2, **characterised in that** an aromatic alcohol, preferably benzyl alcohol, is used for cleaning the print head.

4. A method according to claims 1 to 3, **characterised in that** the resin component comprises a mixture of furfuryl alcohol and urea resin with a nitrogen content of about 4 wt.% relative to the total resin mixture.

5. A method according to any of claims 1 to 4, **characterised in that** the hardener is xylene sulphonic acid weighing 30 to 50% of the total resin mixture.

## Revendications

1. Procédé de fabrication d'un moule en sable par le procédé d'impression en 3D à régénération, à l'aide d'un système de liant durcissable sous l'action d'acides selon lequel, on ajoute au composant de résine du système de liant au moins un composé renfermant de l'azote avec une teneur en azote de 2 à 6 % en poids par rapport à la totalité de la résine, et on utilise en tant qu'agent durcisseur, un acide aryl sulfonique en proportion pondérale de 10 à 65 % de la quantité totale de résine.

2. Procédé conforme à la revendication 1,
**caractérisé en ce que**
le sable du moule est préalablement mélangé avec l'acide aryl sulfonique et le mélange sable/acide est imprimé en couches avec le composant de résine renfermant de l'azote.

3. Procédé conforme à la revendication 1 ou 2,
**caractérisé en ce que**
pour nettoyer la tête d'impression, on utilise un alcool aromatique, de préférence de l'alcool benzylique.

4. Procédé conforme à l'une de revendications 1 à 3,
**caractérisé en ce que**
le composant de résine est constitué d'un mélange d'alcool furfurylique et de résine d'urée ayant une teneur en azote d'environ 4 % en poids par rapport à la quantité totale de résine.

5. Procédé conforme à l'une des revendications 1 à 4,
**caractérisé en ce qu'**
en tant qu'agent durcisseur, on utilise de l'acide xylène sulfonique en proportion pondérale de 30 à 50 % de la quantité totale de résine.
